# EUROPÄISCHE PATENTANMELDUNG

(11) **EP 2 735 428 A1**
(43) Veröffentlichungstag der Anmeldung: **28.05.2014**
(21) Anmeldenummer: 13194223.7
(22) Anmeldetag: 25.11.2013
(51) Int. Cl.: B29C 49/12, B29C 49/06, B29C 49/36, B29C 49/46

(54) **Streckblasverfahren sowie Streckblasmaschine**

(30) Priorität: 23.11.2012 DE 102012111348
(71) Anmelder: Krones AG, 93073 Neutraubling (DE)
(72) Erfinder: Hirdina, Jochen, 93073 Neutraubling (DE)
(74) Vertreter: Bittner, Bernhard

(57) **Zusammenfassung**

Die Erfindung betrifft ein Streckblasverfahren zum Streckblasen eines Kunststoffvorformlings (10) zu einem Behältnis (10A), bei welchem der Kunststoffvorformling (10) in einer Blasform (8A) einer Streckblasmaschine (1) zu dem Behältnis (10A expandiert wird, und bei welchem der Kunststoffvorformling (10) mithilfe eines in Reckrichtung (Y) in die Blasform (8A) axial hinein verlagerbaren Reckstangenelements (5) zusätzlich gereckt wird, wobei der Kunststoffvorformling (10) während seines Expandierens zumindest bereichsweise mittels des Reckstangenelements (5) angesaugt und hierbei an dem Reckstangenelement (5) fixiert wird, um das Expansionsverhalten des Kunststoffvorformlings (10) zu beeinflussen.

## Beschreibung

Die Erfindung betrifft ein Streckblasverfahren zum Streckblasen eines Kunststoffvorformlings zu einem Behältnis, bei welchem der Kunststoffvorformling in einer Blasform einer Streckblasmaschine zu dem Behältnis expandiert wird, und bei welchem der Kunststoffvorformling mithilfe eines in Reckrichtung in die Blasform axial hinein verlagerbaren Reckstangenelements zusätzlich gereckt wird.

Die Erfindung betrifft außerdem eine Streckblasmaschine zum Streckblasen eines Kunststoffvorformlings zu einem Behältnis, insbesondere zum Durchführen des vorliegenden Streckblasverfahrens, mit wenigstens einer eine Blasform umfassenden Blasstation, bei welcher die wenigstens eine Blasstation ein Reckstangenelement zum Recken des Kunststoffvorformlings in Reckrichtung umfasst.

Gattungsgemäße Streckblasverfahren sind aus dem Stand der Technik hinlänglich bekannt. Beispielsweise wird jegliche Art von Kunststoffbehältnissen in einem zweistufigen Streckblasverfahren aus in der Regel rotationsymmetrischen Kunststoffvorformlingen hergestellt, indem diese mittels Prozessluft in einer Blasform einer Streckblasmaschine zu den Kunststoffbehältnissen expandiert werden. Diese Kunststoffvorformlinge werden vor dem Expandieren meist auf eine definierte Prozesstemperatur erwärmt, um mit einer entsprechenden Umformtemperatur einen gezielten Umformvorgang beim Streckblasen zu ermöglichen.

Hierbei ist die Umformungstemperatur von großer Bedeutung. Nach dem Stand der Technik wird der Kunststoffvorformling mithilfe einer IR-Strahlung oder anderer Strahlungsquellen, mit einem Temperaturprofil versehen. Üblicherweise ist das Temperaturprofil um den Umfang gleichmäßig verteilt und es variiert prozessabhängig lediglich in Längsrichtung des Kunststoffvorformlings. Nachdem der Kunststoffvorformling entsprechend erwärmt ist, kommt der eigentliche Umformvorgang, bei welchem der Kunststoffvorformling mittels Druckluft insbesondere in einem Streckblasprozess zu dem jeweiligen Kunststoffbehältnis expandiert wird.

Eine wesentliche Charakteristik eines solchen Kunststoffvorformlings kann darin gesehen werden, dass er aus einem bereits auf Endmaß gefertigten Mundstückbereich und aus einem sich daran anschließenden noch zu verformenden Body-Bereich besteht. Das hierbei zu verarbeitende Material - meistens Polyethylenterephthalat, kurz PET - zeichnet sich insbesondere auch dadurch aus, dass es beim Expandieren bzw. Verstrecken zu einer Selbstverfestigung (strain hardening) neigt. Dieser Effekt wird seitjeher gezielt bei der Produktion von derartigen Kunststoffbehältnissen genutzt, um die Wanddickenverteilung des jeweiligen Kunststoffbehältnisses zu optimieren.

Vereinfacht dargestellt kann man sagen, dass ein wärmerer Materialbereich sich hierbei zuerst verstreckt und verformt, und zwar solange, bis ein sich durch die Selbstverfestigung ergebender Verstreckungswiderstand größer ist als ein Verstreckungswiderstand eines benachbarten kälteren Materialbereiches. Problematischer erweist sich hierbei insbesondere die Expansion eines dem Mundstückbereich abgewandten Kunststoffvorformling-Kuppenbereichs, welcher im Wesentlichen den späteren Bodenbereich des Kunststoffbehältnisses ausgestaltet, da dort eine wesentlich geringere Verformung bzw. Expansion des Kunststoffvorformlings stattfindet.

Insofern kann dort nachteilig auch nur sehr wenig Material aus dem Zentrum des Kuppenbereichs heraus verstreckt werden. Die sich hieraus ergebenden negativen Folgen umfassen insbesondere eine Materialdickstelle in diesem Zentrum. Nachteilig enthält diese Materialdickstelle somit nicht genutztes Material, was insofern dort einen erhöhten Kühlbedarf erfordert, damit rasch eine gewünschte Formstabilität erzielt werden kann. Zwar ist es aus dem Stand der Technik durch Vorsehen einer entsprechenden Mechanik im Blasformboden bekannt, die Gefahr einer derartigen Materialdickstellenausbildung zu reduzieren bzw. zu vermeiden. Jedoch baut diese Mechanik relativ aufwendig.

Es ist Aufgabe vorliegender Erfindung, eine Möglichkeit zu schaffen, insbesondere derartige Materialdickstellen konstruktiv und verfahrenstechnisch einfacher verstrecken zu können.

Die Aufgabe der Erfindung wird von einem Streckblasverfahren zum Streckblasen eines Kunststoffvorformlings zu einem Behältnis gelöst, bei welchem der Kunststoffvorformling in einer Blasform einer Streckblasmaschine zu dem Behältnis expandiert wird, und bei welchem der Kunststoffvorformling mithilfe eines in Reckrichtung in die Blasform axial hinein verlagerbaren Reckstangenelements zusätzlich gereckt wird, wobei der Kunststoffvorformling während seines Expandierens zumindest bereichsweise - und wenigstens zeitweise - an dem Reckstangenelement fixiert wird, um das Expansionsverhalten des Kunststoffvorformlings zu beeinflussen.

Das Reckstangenelement bzw. die Reckstange muss dabei den Kunststoffvorformling (im folgenden auch als Preform bezeichnet) nicht zwangsläufig die gesamte Zeit bzw. während des gesamten Expansionsvorgangs fixieren bzw. ansaugen. Es wäre auch denkbar, dass die Reckstange den Kunststoffvorformling nur zu Beginn der Expansion ansaugt und dann in an sich bekannter Weise zusammen mit dem Preform in Richtung Bodenform fährt.

Vorzugsweise wird der Kunststoffvorformling mittels des Reckstangenelements angesaugt und so an diesem fixiert. Es wäre jedoch auch eine andere Art des Fixierens möglich, etwa ein Fixieren des Kunststoffvorformlings zwischen dem Ende der Reckstange und einem Bereich der Blasform, etwa einem Bereich der Bodenform, welcher als Vorsprung ausgebildet ist, der sich in Richtung auf den Kunststoffvorformling zu erstreckt. Dabei ist es möglich, dass der Kunststoffvorformling bzw. insbesondere ein Bereich um einen Anspritzpunkt zwischen der Reckstange und diesem Vorsprung eingeklemmt wird. So könnte beispielsweise in der Bodenform ein federbelasteter Vorsprung angeordnet sein, der sich jedoch unter der Kraft der Reckstange wieder während des Expansionsvorgangs in die Bodenform zurückbewegt. Zwischen diesem federbelasteten Vorsprung und der Reckstange kann der Kuppenbereich bzw. der Bereich um den Anspritzpunkt des Kunststoffvorformlings während des Expansionsvorganges eingeklemmt werden. Vorteilhaft wird zumindest ein Bereich des Kunststoffvorformlings an dem Reckstangenelement fixiert, der einen Anspritzpunkt des Kunststoffvorformlings vollständig enthält.

Damit ist der Kunststoffvorformling erfindungsgemäß während seines Umformens zu dem Behältnis an dem Reckstangenelement - bevorzug vakuumfixiert - angeordnet, während gleichzeitig dieser Kunststoffvorformling mittels eines Blasdrucks expandiert wird. Vorteilhaft ist das Reckstangenelement in den Kunststoffvorformling einführbar bzw. wird in diesen eingeführt.

Zwar ist es aus dem Stand der Technik, beispielsweise aus der Druckschrift DE 10 2005 05 74 65 A1 bekannt, einen Kunststoffvorformling mittels einer Reckstange und eines Vakuums zwischen zwei Bearbeitungsstationen zu transferieren. Jedoch bezieht sich dies auf einen Zeitpunkt vor dem eigentlichen Streckblas-Prozess und es besteht dort keinerlei Zusammenhang, hierbei eine Materialverstreckung an dem Kunststoffvorformling während des Streckblas-Prozesses vorteilhaft modulieren zu können, wie dies erfindungsgemäß vorgeschlagen ist.

Dadurch, dass der Kunststoffvorformling nämlich während seiner Expansion, also während seiner Umformung zu dem Behältnis innerhalb der Blasform, gleichzeitig - insbesondere durch Unterdruck - zumindest bereichsweise durch das Reckstangenelement angesaugt und insofern an dem Reckstangenelement fixiert ist, kann das Material an kritischen Bereichen des Kunststoffvorformlings ohne zusätzliche Bauteilkomponenten der Blasform wesentlich besser verteilt werden.

Zu einem derartigen kritischen Bereich gehört ohne Zweifel auch der Kuppenbereich des Kunststoffvorformlings.

Neben dem Überwinden der vorstehend bereits erwähnten Nachteile, kann durch die bessere Verteilung bzw. Verstreckung des vorhandenen Materials insgesamt auch Material zum Herstellen der Behältnisse eingespart werden. Hierdurch können fertige Behältnisse gewichtsmäßig leichter gebaut werden.

Vorteilhafterweise wird der Kunststoffvorformling während des Fixierens bzw. Ansaugens an das Reckstangenelement weiter zu dem Behältnis expandiert. Da aufgrund des hieraus resultierenden dünneren Bodenbereichs an diesem Behältnis insbesondere auch ein Kühlbedarf des zu kühlenden Bodenbereichs reduziert werden kann, kann auch die Ausstoßleistung an einer Blasmaschine wesentlich erhöht werden. Zudem kann durch die Reduzierung des Kühlbedarfs der Energieverbrauch reduziert werden, was hinsichtlich der enorm hohen Anzahl an diesbezüglich herzustellenden Behältnissen energetisch vorteilhaft ist.

Darüber hinaus kann sich vorliegend die Herstellung von "Light Weight"-Behältnissen und insbesondere von panelfreien Hotfillflaschen für die Heißabfüllung aufgrund einer bisher noch nicht gekannten flexibel formbaren Bodengeometrie vereinfacht werden.

Insofern ist es vorteilhaft, wenn während des Expandierens wenigstens ein Materialbereich des Kunststoffvorformlings derart an einer Öffnung des Reckstangenelements angesaugt und hierdurch an dem Reckstangenelement fixiert wird, dass ein Streckverhalten des Kunststoffvorformlings an dem angesaugten Materialbereich während des Expandierens beeinflusst wird.

Vorliegend kann dieses Fixieren bzw. Ansaugen während des Umformvorgangs des Kunststoffvorformlings zu dem Behältnis entweder kontinuierlich oder auch nur temporär erfolgen.

Insofern kann eine Fixierungs- bzw. Ansaugdauer von einer Streckblasdauer verschieden eingestellt werden, so dass die Ansaugdauer nicht die gesamte Expansions- bzw. Umformphase des Kunststoffvorformlings beträgt.

Es ist denkbar, dass das Reckstangenelement mit unterschiedlichen Materialbereichen des Kunststoffvorformlings pneumatisch wechselwirken kann, um den Kunststoffvorformling mittels des Unterdrucks bereichsweise festzulegen. Eine vorteilhafte Verstreckung von Material des Kunststoffvorformlings kann jedoch erzielt werden, wenn der Kunststoffvorformling während seiner Expansion an seinem dem Mundstückbereich gegenüberliegenden Materialbereich, insbesondere an seinem Kuppenbereich, mithilfe des Reckstangenelements fixiert bzw. angesaugt wird.

In der Regel umfasst der Kuppenbereich den Anspritzpunkt des Kunststoffvorformlings, an welchem sich beim Herstellen bzw. beim Spritzgießen des Kunststoffvorformlings herstellungsbedingt eine Materialanhäufung bildet. Insbesondere in diesem Kuppenbereich lässt sich die dort vorhandene Materialanhäufung bisher entweder gar nicht bzw. nur unzureichend oder nur mit erheblichen konstruktiven Aufwand von außerhalb des Kunststoffvorformlings verstrecken.

Mithilfe vorliegender Erfindung gelingt es verfahrenstechnisch jedoch extrem einfach, und zudem mit einem konstruktiv sehr geringen Aufwand, dass herstellungsbedingte Materialanhäufungen während des Umformens des Kunststoffvorformlings in ein Behältnis vorteilhaft verstreckt werden können.

Darüber hinaus wird durch das Ansaugen des Kunststoffvorformlings im Kuppenbereich hervorragend eine Vakuumzentrierung des Kunststoffvorformlingkuppenbereichs während des Streckblasens erzielt.

Insofern ist es vorteilhaft, wenn während des Ansaugens des Kunststoffvorformlings mittels des Reckstangenelements ein von dem Reckstangenelement angesaugter Materialbereich und/oder daran angrenzende Materialbereiche gleichzeitig verstreckt werden. Hierdurch kann der zu verstreckende Materialbereich relativ zielgenau bestimmt werden. Außerdem kann die Verfahrensvielfalt beim Umformen des Kunststoffvorformlings zu dem jeweiligen Behältnis vorteilhaft erweitert werden.

Eine bevorzugte Verfahrensvariante sieht vor, dass zumindest diese benachbarten Materialbereiche weiter axial in Reckrichtung expandiert werden, wenn der Kunststoffvorformling an dem Reckstangenelement - insbesondere mittels eines Vakuums - fixiert wird, wodurch insbesondere der Kuppenbereich des Kunststoffvorformlings hervorragend ausgejüngt und eine dortige Materialanhäufung vorteilhaft verstreckt werden kann.

Es ergibt sich, dass es hinsichtlich des vorliegenden Streckblasverfahrens sehr viele Verfahrensvarianten gibt. Eine besonders bevorzugte Verfahrensvariante sieht insbesondere vor, dass das Reckstangenelement zum Recken des Kunststoffvorformlings um einen frei wählbaren Verlagerungsweg in Reckrichtung in eine Halteposition hinein verlagert und in dieser Halteposition für einen frei wählbaren Zeitraum temporär gehalten wird, während in dieser Halteposition der mittels des Reckstangenelements fixierte bzw. angesaugte Kunststoffvorformling axial und/oder radial weiter expandiert wird. Hierdurch eröffnet sich eine außerordentlich hohe Anzahl an Umformvarianten hinsichtlich der Streckblasverfahren, bei welchem Kunststoffvorformlinge zu Behältern umgeformt werden. Im Anschluss an den oben genannten Zeitraum, in dem die Reckstange in ihrer Halteposition gehalten werden kann, bewegt sich diese vorteilhaft in bekannter Weise in Richtung der Vorformlingskuppe, um den Vorformling zu strecken.

Das vorliegende Streckblasverfahren lässt sich denkbar einfach realisieren, wenn innerhalb des Kunststoffvorformlinges ein Blasdruck zum Expandieren des Kunststoffvorformlings und (insbesondere innerhalb des Reckstangenelements) ein Unterdruck zum Ansaugen des Kunststoffvorformlings zumindest zeitweise gleichzeitig vorgehalten werden.

Insofern wird auch räumlich innerhalb einer Blasformkavität, in welcher das Reckstangenelement hineinbewegt wird, ein Blasdruck zum Expandieren des Kunststoffvorformlings und ein Unterdruck zum Ansaugen des Kunststoffvorformlings gleichzeitig vorgehalten.

Die Aufgabe der Erfindung wird auch noch von einer Streckblasmaschine zum Streckblasen eines Kunststoffvorformlings zu einem Behältnis, insbesondere zum Durchführen des vorliegenden Streckblasverfahrens nach einem der hier beschriebenen Merkmale, mit wenigstens einer eine Blasform umfassenden Blasstation gelöst, bei welcher die wenigstens eine Blasstation ein Reckstangenelement zum Recken des Kunststoffvorformlings in Reckrichtung umfasst, wobei die Streckblasmaschine eine Vakuumerzeugungseinrichtung umfasst, mittels welcher während des Streckblasens des Kunststoffvorformlings zu dem Behältnis innerhalb des Reckstangenelements ein Vakuum erzeugbar ist.

Erfindungsgemäß ist diese Vakuumerzeugungseinrichtung derart mit einer Blasdruckerzeugungseinrichtung der Streckblasmaschine verschaltet, dass während des Streckblasens ein Vakuum innerhalb des Reckstangenelements erzeugt werden kann.

Es ist vorteilhaft, wenn die wenigstens eine Blasstation der Streckblasmaschine ein Reckstangenelement mit einem an seinem dem Kunststoffvorformling zugewandten Hohlstangekörperende angeordneten Dichtungslippenelement zum pneumatischen Abdichten des Reckstangenelements gegenüber dem Kunststoffvorformling aufweist. Hierdurch kann der Kunststoffvorformling betriebssicher angesaugt werden.

Vorteilhafterweise lassen sich mit diesem Reckstangenelement selbst bereits in Betrieb befindliche Streckblasmaschinen baulich einfach nachrüsten, um das erfindungsgemäße Verfahren durchführen zu können.

Das Dichtungslippenelement umschließt hierbei vorteilhaft eine Vakuumöffnung eines Unterdruckbereichs des Reckstangenelements und dichtet diese Vakuumöffnung gegenüber dem umliegenden Blasdruckbereich ab.

Um eine gute pneumatische Dichtigkeit zwischen dem Reckstangenelement und dem Kunststoffvorformling erzielen zu können, ist es vorteilhaft, wenn der Werkstoff des Dichtlippenelements dergestalt ist, dass sich dessen äußere Gestalt unproblematisch an die sich durch den Expansionsvorgang verändernde Form des Kunststoffvorformlings dynamisch anpassen kann. Vorteilhaft ist das Dichtlippenelement elastisch ausgebildet.

Alternativ kann das Reckstangenelement einen Überdruckbereich zum Bereitstellen eines Blasdrucks innerhalb des Kunststoffvorformlings und einen von diesem Überdruckbereich pneumatisch getrennten Unterdruckbereich zum Ansaugen des Kunststoffvorformlings aufweisen. Insofern kann die wenigstens eine Blasstation der Streckblasmaschine alternativ ein Reckstangenelement mit räumlich und pneumatisch voneinander getrennten Druckbereichen aufweisen.

Vorzugsweise wird dieser Blasdruck jedoch in bekannter Weise mittels eines herkömmlichen Düsenelements bereitgestellt und/oder dem Kunststoffvorformling insbesondere in dem Bereich zwischen der Reckstange und der Mündung zugeführt.

Mittels dieser Streckblasmaschine kann ein Verstrecken von Materialanhäufungen an Kunststoffvorformlingen in Materialbereichen, welche bisher technisch nur sehr aufwändig behandelt werden konnten, konstruktiv einfach vorgenommen werden.

Weitere Vorteile, Ziele und Eigenschaften vorliegender Erfindung werden anhand anliegender Zeichnung und nachfolgender Beschreibung erläutert, in welchen im Zusammenhang mit einer Herstellanlage von Kunststoffbehältnissen beispielhaft eine Streckblasmaschine mit einem Reckstangenelement zum Durchführen des erfindungsgemäßen Verfahrens dargestellt und beschrieben ist. In der Zeichnung zeigen:
- Figur 1: schematisch eine Ansicht einer Anlage zum Herstellen von Kunststoffbehältnissen mit einer in einem Reinraum angeordneten Blasstation einer Streckblasmaschine zum Durchführen des erfindungsgemäßen Verfahrens umfassend ein Reckstangenelement mit einem an seinem dem Kunststoffvorformling zugewandten Hohlstangenkörperende angeordneten Dichtungslippenelement zum pneumatischen Abdichten gegenüber dem Kunststoffvorformling;
- Figur 2: schematisch eine Detailansicht der Blasstation der Streckblasmaschine aus der Figur 1;
- Figur 3: schematisch eine Prinzipansicht des mit der Streckblasmaschine aus den Figuren 1 und 2 durchführbaren erfindungsgemäßen Streckblasverfahrens; und
- Figur 4: schematisch eine geschnittene Teilansicht einer Blasform mit einem darin bereits teilweise expandierten Kunststoffvorformling, welcher an seinem Kuppenbereich an dem Reckstangenelement vakuumfixiert ist.

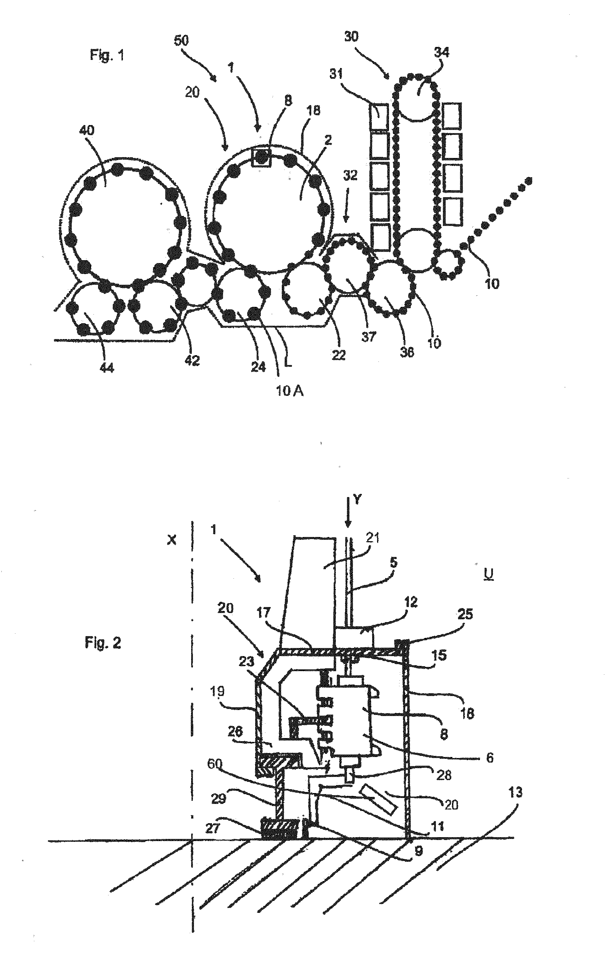

Figur 1 zeigt zuerst einmal eine schematische Darstellung einer Anlage 50 zum Herstellen von Kunststoffbehältnissen 10A. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Kunststoffvorformlinge 10 an eine Sterilisationseinrichtung 32 übergibt. Diese Sterilisationseinrichtung 32 weist dabei ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch, wie oben erwähnt, durch elektromagnetische bzw. UV-Strahlung möglich. Insbesondere wird in diesem Bereich eine Innensterilisation der Kunststoffvorformlinge 10 durchgeführt.

Das Bezugszeichen 20 bezeichnet in seiner Gesamtheit einen Reinraum, dessen Außenbegrenzungen hier durch die punktierte Linie L angedeutet ist. In einer weiteren bevorzugten Ausführungsform ist der Reinraum 20 nicht nur im Bereich von Transportrads 2 und einer Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge 10 in den Reinraum 20 einzuführen, ohne dass dabei zu viel Gas aus dem Reinraum 20 strömt und so verloren geht.

Der Reinraum 20 ist, wie durch die gestrichelte Linie L angedeutet, an die Außengestalt der einzelnen Anlagenkomponenten angepasst. Auf diese Weise kann das Volumen des Reinraums 20 reduziert werden.

Das Bezugszeichen 1 bezeichnet in ihrer Gesamtheit eine Streckblasmaschine, bei der an einem Transportrad 2 eine Vielzahl von Blasstationen 8 angeordnet ist, wobei hier lediglich eine dieser Blasstationen 8 dargestellt ist. Mit diesen Blasstationen 8 werden die Kunststoffvorformlinge 10 zu Behältnissen 10A expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Streckblasmaschine 1 realisiert. So wäre es möglich, dass der Reinraum 20 zumindest im Bereich der Streckblasmaschine 1 kanalartig ausgeführt ist.

Das Bezugszeichen 22 bezieht sich auf eine Zuführeinrichtung, welche die Kunststoffvorformlinge 10 an die Streckblasmaschine 1 übergibt und das Bezugszeichen 24 auf eine Abführeinrichtung, welche die hergestellten Kunststoffbehältnisse 10A von der Streckblasmaschine 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Streckblasmaschine 1 bzw. eine Übernahme der Kunststoffbehältnisse 10A von der Streckblasmaschine 1 erreicht werden.

Mit einer Übergabeeinheit 42 werden die expandierten Kunststoffbehältnisse 10A an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung 40 wäre es möglich, dass nicht die gesamte Befüllungseinrichtung 40 mit beispielsweise einem Reservoir für ein Getränk vollständig innerhalb des Reinraums 20 angeordnet ist, sondern auch hier lediglich diejenigen Bereiche, in denen tatsächlich die Kunststoffbehältnisse 10A geführt werden. Insoweit könnte auch die Befüllungseinrichtung 40 in ähnlicher Weise aufgebaut sein wie die Streckblasmaschine 1 zum Umformen der Kunststoffvorformlinge 10.

Wie erwähnt, ist der Reinraum 20 im Bereich der Streckblasmaschine 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum 20 überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Darüber hinaus kann noch eine hier nicht weiter gezeigte Beaufschlagungseinrichtung vorgesehen sein, welche zum Beaufschlagen insbesondere der Blasstationen 8 mit dem fließfähigen Sterilisationsmittel dient. Diese Beaufschlagungseinrichtung kann sich am Transportrad 2 oder an der stehenden Wandung 18 befinden oder generell stationär angeordnet sein und Düsen oder ähnliches aufweisen. Zudem kann es vorteilhaft sein, Sterilluft zum Sterilisieren des Reinraums 20 über das Lüftungssystem in den Reinraum 20 einzubringen. Alternativ oder zusätzlich könnte es sich jedoch bei der Beaufschlagungseinrichtung jedoch auch um eine Einrichtung handeln, welche die Blasstationen 8 mit (insbesondere elektromagnetischer) Strahlung, z.B. UV - oder Elektronenstrahlung beaufschlagt. In diesem Falle wäre vorteilhaft wenigstens ein Bereich der Dichtungseinrichtung in einem zusammengebauten Zustand der Bauteile für diese elektromagnetische Strahlung erreichbar. Das in der Figur 2 gezeigte Bezugszeichen U bezieht sich auf eine (unsterile) Umgebung des Reinraums 20.

Figur 2 zeigt eine Detaildarstellung der Streckblasmaschine 1 im Bereich einer Blasstation 8. Eine Vielzahl derartiger Blasstationen 8 wird mit einer Transporteinrichtung 2 (d.h. dem Träger 2) drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation 8 auf ihrem Weg durch den Reinraum 20 zu öffnen und zu schließen, um insbesondere den Kunststoffvorformling 10 in die Blasstation 8 einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 28 unterhalb der einzelnen Blasstationen 8 aus dem Reinraum 20 herauszuführen.

Der Träger 26 ist dabei fest auf einem Haltekörper 29 angeordnet und dieser Haltekörper 29 ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf ein Reckstangenelement, welches gegenüber der Blasstation 8 beweglich ist, um die Kunststoffvorformlinge 10 in ihrer Längsrichtung zu recken. Dabei ist auf dem Deckel 17 hier ein Schlitten 12 angeordnet, demgegenüber das Reckstangenelement 5 in der Reckrichtung Y beweglich ist. Das Bezugszeichen 21 bezieht sich auf eine weitere Halterung für diesen Schlitten 12 des Reckstangenelements 5.

Man erkennt, dass bestimmte Bereiche des Reckstangenelements 5 während des Blasvorgangs sowohl außerhalb des Reinraums 20 als auch innerhalb des Reinraums 20 angeordnet sind. Zu diesem Zweck ist es möglich, außerhalb des Reinraums 20 bzw. oberhalb des Schlittens 12 eine Schutzeinrichtung wie einen Faltenbalg vorzusehen, der das Reckstangenelement 5 umgibt, so dass kein Bereich des Reckstangenelements 5 unmittelbar mit der Außenumgebung in Berührung kommt. Es wird jedoch darauf hingewiesen, dass der Reinraum für die vorliegende Erfindung nicht unbedingt erforderlich ist, bzw. die Erfindung auch bei nicht-aseptischen Maschinen Anwendung finden kann.

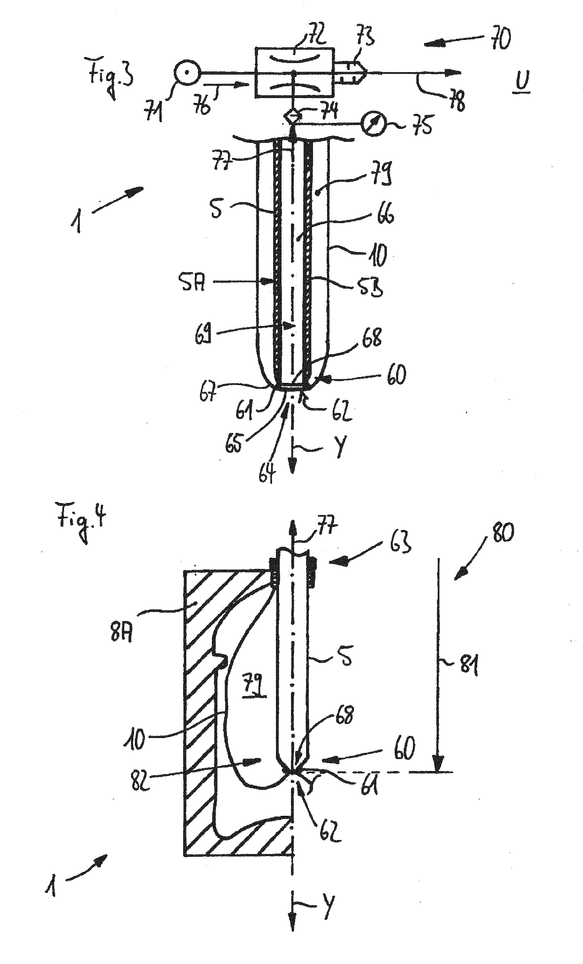

Die einzelnen Blasstationen 8 weisen jeweils Blasformträger 6 auf, innerhalb derer Blasformen 8A (siehe Figur 4) angeordnet sind. Diese Blasformträger 6 können hier, wie im Stand der Technik bekannt, zwei Blasformträgerteile aufweisen, die bezüglich einander mittels einer gemeinsamen Schwenkwelle zum Öffnen und Schließen der Blasform 8A schwenkbar sind.

Nach der Darstellung gemäß der Figur 3 ist das Reckstangenelement 5 mit seinem Hohlstangenkörper 5A bereits in den Kunststoffvorformling 10 in Reckrichtung Y derart eingeführt, dass das Reckstangenelement 5 an seinem dem Kunststoffvorformling 10 zugewandten Hohlstangenkörperende 60 mit einem Dichtungslippenelement 61 an dem Kuppenbereich 62 des Kunststoffvorformlings 10 dichtend anliegt. Der Kuppenbereich 62 verkörpert einen dem Mundstückbereich 63 (siehe Figur 4) des Kunststoffvorformlings 10 gegenüberliegenden Materialbereich 64 des Kunststoffvorformlings 10, welcher wiederum einen mittels des Reckstangenelements 5 angesaugten Materialbereich 65 des Kunststoffvorformlings 10 formuliert.

Vorteilhafterweise werden nun während des Ansaugens des Kunststoffvorformlings 10 mittels eines innerhalb des Reckstangenelements 5 erzeugten Vakuums 66 der von dem Reckstangenelement 5 angesaugte Materialbereich 65 sowie daran angrenzende Materialbereiche 67 in einem ansonsten an sich bekannten Umformprozess im Sinne der Erfindung durch Einleitung von Druckluft verstreckt. Die Position der Reckstange kann während einem frei wählbaren Zeitraum der Expansion beliebig eingestellt werden. Bevorzugt verweilt die Reckstange zum Zeitpunkt des Einleitens der Druckluft zunächst in Ihrer ursprünglichen Position, in welcher ihr Dichtungselement an der Innenseite der Preformkuppe dichtend anliegt. Welche Materialbereiche 64 bzw. 65 und/oder 67 hierbei mehr oder weniger stark verstreckt werden, wird insbesondere auch durch die jeweilige Temperierung dieser Materialbereiche 64 bzw. 65, 66 eingestellt. Sobald die voreingestellte Materialverstreckung im Vorformling erreicht wurde, kann die Position der Reckstange automatisch verändert werden. Insbesondere durch Verwendung des elektrischen Reckens ist eine präzise zeitliche Steuerung der Reckstangenposition möglich. Denkbar wäre jedoch auch, die Reckstangenposition pneumatisch zu steuern. Es ist dabei insbesondere möglich, dass je nach Preformgeometrie, also auch je nach Materialdicke im Boden eingestellt wird, wie viel Material bzw. wie lange die Reckstange die Kuppe ansaugen muss, damit eine optimale Materialverstreckung im Boden erreicht werden kann. So kann insbesondere die Zeitdauer während des Expansionsvorgangs, während dessen die Preformkuppe angesaugt wird verändert werden. Auch kann das Zeitfenster, während dessen ein solches Ansaugen erfolgt, in Bezug zu dem Expansionsvorgang verschoben werden.

Dabei ist es möglich, dass die Materialdicken je Preformgeometrie zentral in der Steuerung hinterlegt sind damit so entsprechend die Expansionsvorgänge auch in Abhängigkeit von der individuellen Ausgestaltung gesteuert können und je nach Preformart automatisch die Zeit des Ansaugens und/oder Haltens der Reckstange in einer bestimmten Position bzw. auch ein zeitlicher Verlauf der Reckstange (bzw. deren Bewegung) eingestellt werden kann. So wäre es denkbar, dass mit dem Ansaugen des Preforms während eines Stillstands der Reckstange oder auch während einer Bewegung der Reckstange begonnen wird. Auch kann das Ansaugen des Preforms während einer Bewegung der Reckstange oder während eines Stillstands unterbrochen werden.

Das Dichtungslippenelement 61 ist konzentrisch um eine Ansaugöffnung 68 eines Unterdruckbereichs 69 herum angeordnet, um diesen Unterdruckbereich 69 an dem Kunststoffvorformling 10 gegenüber Blasdruckbereichen abzudichten.

Zum Erzeugen des Vakuums 66 innerhalb des Reckstangenelements 5 ist die Streckblasmaschine 1 noch mit einer Vakuumerzeugungseinrichtung 70 (beispielhaft nur in Figur 3 gezeigt) ausgerüstet. Diese Vakuumerzeugungseinrichtung 70 zeichnet sich in diesem Ausführungsbeispiel durch einen Luftverdränger 71, eine Drossel 72, einen Schalldämpfer 73 sowie ein Filterelement 74 und ein Vakuummanometer 75 aus. Das durch den Luftverdränger 71 geförderte Luftvolumen 76 wird mittels der Drossel 72 beschleunigt, wobei hierdurch ein weiteres Luftvolumen 77 aus dem Reckstangenelement 5 herausgesaugt und das Vakuum 66 erzeugt wird. Das Luftvolumen 76 und das weitere Luftvolumen 77 werden als Gesamtluftvolumen 78 durch den Schalldämpfer 73 hindurch in die Umgebung U abgegeben. Das Vakuum könnte jedoch auch durch ein weiteres stangenförmiges Element erzeugt werden, wobei der Vorformling anschließend durch eine an sich bekannte Reckstange gestreckt werden kann.

Der Blasdruck wird in bekannter Weise mittels eines hier nicht näher gezeigten Düsenelements in einen Hohlraum 79 des Kunststoffvorformlings 10 eingebracht.

Alternativ kann das Reckstangenelement 5 neben dem Unterdruckbereich 69 noch einen hier nicht weiter gezeigten Überdruckbereich zum Bereitstellen eines Blasdrucks innerhalb des Hohlraums 79 des Kunststoffvorformlings 10 aufweisen, wobei der Unterdruckbereich 69 von diesem Überdruckbereich pneumatisch getrennt ist. Der Überdruckbereich wird in diesem Ausführungsbeispiel durch Luftkanäle (hier nicht gezeigt) in der Wandung 5B des Reckstangenelements 5 gebildet, welche in den Hohlraum 79 des Kunststoffvorformlings 10 münden, um hierüber Blasluft zum Expandieren des Kunststoffvorformlings 10 in den Hohlraum 79 einblasen zu können.

Nach der Darstellung gemäß der Figur 4 befindet sich der Kunststoffvorformling 10 in einer fortgeschrittenen Expansionsphase 80 auf etwa halbem Umformweg zu einem Behältnis 10A, wobei das Reckstangenelement 5 in Reckrichtung Y um einen Verlagerungsweg 81 in eine Halteposition 82 hinein verlagert ist und der Kunststoffvorformling 10 zumindest bereichsweise mittels des Reckstangenelements 5 angesaugt und hierbei an dem Reckstangenelement 5 fixiert wird, um das Expansionsverhalten des Kunststoffvorformlings 10 bzw. das Streckverhalten des Materials des Kunststoffvorformlings 10 zu beeinflussen.

Innerhalb der Blasform 8A ist der bereits halb expandierte Kunststoffvorformling 10 gut zu erkennen, wie er mit seinem Kuppenbereich 62 trotz des fortschreitenden Blasprozesses an dem Reckstangenelement 5 weiter saugfixiert ist. Insofern schreitet die Expansion des Kunststoffvorformlings 10 trotz des Ansaugens des Kunststoffvorformlings 10 an der Reckstangenelement 5 fort, und insbesondere die unmittelbar an dem angesaugten Materialbereich 65 angrenzenden Materialbereiche 66 werden vorteilhaft verstreckt, so dass am Bodenbereich des später fertig hergestellten Behältnisses 10A keine ungünstigen Materialanhäufungen zurückbleiben. Hierbei überholt der Kunststoffvorformling 10 das Reckstangenelement 5 in Reckrichtung Y axial.

Es ist dabei möglich, dass der Blasformvorgang in mehreren Schritten erfolgt. So kann zunächst ein Vorblasen des Kunststoffvorformlings stattfinden, anschließend ein Zwischenblasen, bei dem der Druck des Kunststoffvorformlings erhöht wird und anschließend ein Fertigblasen, während dem bevorzugt ein Druck innerhalb des Kunststoffvorformlings im Wesentlichen gehalten wird, um diesen innerhalb seiner Blasform auszuformen. Dabei kann sich ein Fertigblasdruck beispielsweise in einem Bereich von 25bar - 50bar, bevorzugt in einem Bereich von 35bar - 50bar und bevorzugt einen Bereich von 35bar - 45bar bewegen. Mit dem Ansaugen des Kunststoffvorformlings bzw. Preforms wird vorzugsweise spätestens zu einem Zeitpunkt begonnen, an dem sich dieser aufgrund des Blasdrucks von der Reckstange lösen könnte.

Es versteht sich, dass es sich bei dem vorstehend erläuterten Ausführungsbeispiel lediglich um eine erste Ausgestaltung des erfindungsgemäßen Streckblasverfahrens handelt. Insofern beschränkt sich die Ausgestaltung der Erfindung nicht auf dieses Ausführungsbeispiel.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Streckblasmaschine
- 2: Transportrad
- 5: Reckstangenelement
- 5A: Hohlstangenkörper
- 5B: Wandung
- 6: Blasformträger
- 8: Blasstation
- 8A: Blasform
- 9: Führungskurve
- 10: Kunststoffvorformling
- 10A: Kunststoffbehältnis
- 11: Folgeeinrichtung
- 12: Schlitten
- 13: Boden
- 17: Deckel
- 18: Wandung
- 19: Seitenwand
- 20: Reinraum
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Abschnitt
- 29: Haltekörper
- 30: Heizeinrichtung
- 31: Heizelementen
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen
- 60: Hohlstangenkörperende
- 61: Dichtungslippenelement
- 62: Kuppenbereich
- 63: Mundstückbereich
- 64: gegenüberliegender Materialbereich
- 65: angesaugter Materialbereich
- 66: Vakuum
- 67: angrenzende Materialbereiche
- 68: Ansaugöffnung
- 69: Unterdruckbereich
- 70: Vakuumerzeugungseinrichtung
- 71: Luftverdränger
- 72: Drossel
- 73: Schalldämpfer
- 74: Filterelement
- 75: Vakuummanometer
- 76: gefördertes Luftvolumen
- 77: weiteres Luftvolumen
- 78: Gesamtluftvolumen
- 79: Hohlraum
- 80: Expansionsphase
- 81: Verlagerungsweg
- 82: Halteposition

- L: Linie
- U: Umgebung
- X: Achse
- Y: Reckrichtung

## Patentansprüche

1. Streckblasverfahren zum Streckblasen eines Kunststoffvorformlings (10) zu einem Behältnis (10A), bei welchem der Kunststoffvorformling (10) in einer Blasform (8A) einer Streckblasmaschine (1) zu dem Behältnis (10A) expandiert wird, und bei welchem der Kunststoffvorformling (10) mithilfe eines in Reckrichtung (Y) in die Blasform (8A) axial hinein verlagerbaren Reckstangenelements (5) zusätzlich gereckt wird,
**dadurch gekennzeichnet, dass**
der Kunststoffvorformling (10) während seines Expandierens zumindest zeitweise an dem Reckstangenelement (5) fixiert wird, um das Expansionsverhalten des Kunststoffvorformlings (10) zu beeinflussen.

2. Verfahren nach Anspruch 1,
**dadurch gekennzeichnet, dass**
der Kunststoffvorformling mittels des Reckstangenelements (5) angesaugt wird.

3. Streckblasverfahren nach Anspruch 2,
**dadurch gekennzeichnet, dass**
der Kunststoffvorformling (10) während seiner Expansion an seinem dem Mundstückbereich (63) gegenüberliegenden Materialbereich (64), insbesondere an seinem Kuppenbereich (62), mithilfe des Reckstangenelements (5) angesaugt wird.

4. Streckblasverfahren nach Anspruch 2 oder 3,
**dadurch gekennzeichnet, dass**
während des Ansaugens des Kunststoffvorformlings (10) mittels des Reckstangenelements (5) ein von dem Reckstangenelement (5) angesaugter Materialbereich (65) und/oder daran angrenzende Materialbereiche (67) verstreckt werden.

5. Streckblasverfahren nach Anspruch 3,
**dadurch gekennzeichnet, dass**
zumindest diese benachbarten Materialbereiche (66) weiter axial in Reckrichtung (Y) expandiert werden, wenn der Kunststoffvorformling (10) an dem Reckstangenelement (5) mittels eines Vakuums (66) fixiert wird.

6. Streckblasverfahren nach einem der Ansprüche 2 bis 5,
**dadurch gekennzeichnet, dass**
das Reckstangenelement (5) zum Recken des Kunststoffvorformlings (10) um einen frei wählbaren Verlagerungsweg (81) in Reckrichtung (Y) in eine Halteposition (82) hinein verlagert und in dieser Halteposition (82) für einen frei wählbaren Zeitraum temporär gehalten wird, während in dieser Halteposition (82) der mittels des Reckstangenelements (5) angesaugte Kunststoffvorformling (10) axial und/oder radial weiter expandiert wird.

7. Streckblasverfahren nach einem der Ansprüche 2 bis 6,
**dadurch gekennzeichnet, dass**
eine Ansaugdauer von einer Streckblasdauer verschieden eingestellt werden.

8. Streckblasverfahren nach einem der Ansprüche 2 bis 7,
**dadurch gekennzeichnet, dass**
ein Blasdruck zum Expandieren des Kunststoffvorformlings (10) und ein Unterdruck zum Ansaugen des Kunststoffvorformlings (10) gleichzeitig vorgehalten werden.

9. Streckblasmaschine (1) zum Streckblasen eines Kunststoffvorformlings (10) zu einem Behältnis (10A), insbesondere zum Durchführen des Streckblasverfahrens nach einem der Ansprüche 1 bis 7, mit wenigstens einer eine Blasform (8A) umfassenden Blasstation (8), bei welcher die wenigstens eine Blasstation (8) ein Reckstangenelement (5) zum Recken des Kunststoffvorformlings (10) in Reckrichtung (Y) umfasst,
**dadurch gekennzeichnet, dass**
die Streckblasmaschine (1) eine Vakuumerzeugungseinrichtung (70) umfasst, mittels welcher während des Streckblasens des Kunststoffvorformlings (10) zu dem Behältnis (10A) innerhalb des Reckstangenelements (5) ein Vakuum (66) erzeugbar ist.

10. Streckblasmaschine (1) nach Anspruch 9,
**dadurch gekennzeichnet, dass**
die wenigstens eine Blasstation (8) der Streckblasmaschine (1) ein Reckstangenelement (5) mit einem an seinem dem Kunststoffvorformling (10) zugewandten Hohlstangekörperende (60) angeordneten Dichtungslippenelement (61) zum pneumatischen Abdichten des Reckstangenelements (5) gegenüber dem Kunststoffvorformling (10) aufweist.
